# EUROPEAN PATENT APPLICATION

(11) **EP 3 895 793 A1**
(43) Date of publication of application: **20.10.2021**
(21) Application number: 20169723.2
(22) Date of filing: 15.04.2020
(51) Int. Cl.: B01J 8/02, B01J 8/04

(54) **AN APPARATUS WITH A RADIAL OR AXIAL-RADIAL PACKED BED FOR PROCESSING A GAS**

(71) Applicant: CASALE SA, 6900 Lugano (CH)
(72) Inventor: RIZZI, Enrico, 22070 Casnate con Bernate (CO) (IT); PANZERI, Nicola, Breganzona (CH); MASANTI, Matteo, Musso (CO) (IT)
(74) Representative: M. Zardi & Co S.A.

(57) **Abstract**

An apparatus comprising a packed bed (11) of solid granular material for processing an input gas, wherein the packed bed has a radial symmetry around an axis (A-A), the packed bed comprises a plurality of concentric stages (S1, S2) and the gas is processed in parallel in the concentric stages of the packed bed.

## Description

### Field of the invention

The present invention relates to process vessels including a packed bed of solid particles traversed by gas stream with a radial or axial-radial flow.

### Prior art

Vessels with a packed bed traversed with a radial or axial-radial flow are known in the art. The packed bed has typically the shape of a hollow cylinder, thus having an annular cross section, an outer cylindrical surface and an inner cylindrical surface. The term radial flow denotes that the bed is traversed by a purely or essentially radial flow; the term axial-radial flow is used to denote that the flow through the bed has a significant component along the axial direction (i.e. the axis of the cylindrical bed). The flow may be directed inward (from the outer surface of the inner surface) or outward (from the inner surface to the outer surface.

Particularly, the axial-radial configuration is generally preferred to a pure axial configuration because it provides that the surface crossed by the gas is larger while the velocity and the pressure drop are reduced.

The gaseous flow traversing the packed bed may be for example a flow of one or more reagents which are converted into one or more desired products, or a gaseous flow containing contaminants which are removed by the bed. The packed bed may be a catalytic bed wherein the solid particles includes particles of a suitable catalyst. Noticeable applications of such vessels include: reactors for the synthesis of ammonia, reactors for the synthesis of methanol, shift converters, reactors for removing nitrogen oxides form flue gas, adsorption systems, molecular sieves.

In radial and axial-radial converters, there is an effort to reduce the pressure drop of the gas traversing the packed bed. In general terms, the pressure drop of the gas corresponds to loss of energy. Particularly, reducing the pressure drops is desirable to adopt a solid bed of fine particles.

Many applications take advantage from reducing the size of the solid particles of the packed bed. For example fine particles may increase the specific surface area and therefore provide a larger surface for contact with the process gas at a given overall size of the bed; fine particles may increase resistance of the bed to poisoning (e.g. poisoning of a catalyst caused by a contaminant in the input gas); fine particles may provide a better packing efficiency, which means for example the ability to accommodate a greater amount of catalyst.

However a small size of the bed particles increases the pressure drop of the gas flow. In radial and axial-radial vessels this drawback has limited the adoption of fine packed beds. The known art generally accepts a compromise but does not provide a solution to this problem.

### Summary of the invention

The aim of the invention is to provide a novel design of a radial or axial-radial packed bed converter which is able to reduce the pressure drop across the packed bed, particularly with a view to use packed beds made of fine particles.

This aim is reached with an apparatus according to claim 1.

The apparatus comprises a packed bed with a radial symmetry around an axis which is for example a vertical axis. The packed bed is composed of granular solid particles and the apparatus is configured for processing an input gas directed to the packed bed by distributing the gaseous input through the packed bed and collecting a processed gas from the packed bed.

According to the invention the packed bed comprises a plurality of concentric stages and the apparatus comprises separate gas distributors and separate gas collectors for each of said stage. The apparatus is arranged to feed the input gas in parallel to the concentric stages of the packed bed. For example the apparatus is configured to split the input gas into separate gas streams for each of said concentric stages. Each gas stream is individually processed in a respective stage of the packed bed. Splitting of the input gas may be obtained by suitable gas distribution means.

Preferably the solid material of the packed bed includes a catalyst or is entirely made of a catalyst. Accordingly the packed bed is preferably a reactive system.

By dividing the input gas to a plurality of concentric stages, operating in parallel, the invention reduces the gas velocity through the solid material of the bed, compared to a standard configuration wherein all the input gas passes through a single stage of packed bed. Consequently the invention reduces the pressure drop suffered by the gas. With respect to a standard design, the pressure drop is lowered because both the gas velocity and the width of the packed solid material to be crossed are reduced.

For example in a packed bed with annulus shape, the invention may provide feeding the input gas at an intermediate region of the annulus, for example in the middle of the annulus, from where part of the input gas enters an inward stage and part of the gas enters an outward stage.

In the exemplary case of a two-stage configuration, a given cylindrical surface of the packed bed is crossed by half of the flow rate compared to a standard configuration. The velocity of the gas is reduced by a factor of two (halved) and the length of the solid bed crossed by the gas is also reduced by the same factor. The pressure drop can be reduced accordingly by a factor of eight, compared to the pressure drop of a standard layout. Embodiments with more than two concentric stages are also possible.

Thanks to the reduced pressure drop, the invention allows to save energy, e.g. energy for compression of the gas. The invention also facilitates the exploitation of fine particles for the solid bed, because it removes or mitigates the drawback of the pressure drop associated with the adoption of fine particles.

The flow direction of the gas through the parallel stages of the bed can vary according to the insertion point. The stages can be crossed with inward or outward direction according to the preferred design or technical needs. A preferred embodiment provides at least one inward stage coupled with at least one outward stage although this is not mandatory for the invention.

Different embodiments include multi-point insertion of the gas inside the annular bed of solid particle, to obtain a multi-split of the bed into multi annular stages allowing a further reduction of the pressure drop.

The lower pressure drop may allow adoption of an inner annulus with a smaller radius compared to the prior art. This may result in an increased room for the catalyst.

The invention provides that concentric stages of the packed bed operate in parallel as the input gas is split between the stages. For example an embodiment with two stages may be termed a twin-bed system.

The residence time of the gas inside the different stages should be the same. To achieve this, the flow split and the residence time may be controlled by adjusting the pressure drop through the collectors (e.g. inlet collectors, outlet collectors or both).

The invention may be applied to reactive systems and non-reactive systems. Examples of preferred fields of application will be given in the following description.

Another aspect of the invention is a process according to the claims.

### Preferred embodiments

The concentric stages of the packed bed may contain the same amount or different amounts of solid particles, i.e. they may represent equal or different portions of the whole bed.

The gas streams effluent from the stages of the bed may be collected and sent to a next bed or to an inter-bed heat exchanger or to outlet piping. The effluents may be collected at any of the bottom part or upper part of the bed or in the inner annulus.

In an embodiment the input gas may enter the packed bed at an intermediate radial location of the packed bed. Accordingly a first portion of the input gas may flow through a first stage with an outward direction and a remaining second portion may flow through a second stage with an inward direction.

Said radial location where the gas enters the packed bed is preferably at 30% to 70% of the radial extension of the annular packed bed, more preferably at 40% to 60%, i.e. at the middle or around the middle of the annular bed. The radial extension of the annular packed bed is understood as the difference between an outer radius and an inner radius of the annulus.

In an embodiment the packed bed comprises at least: a first stage configured to be traversed with a radial outward flow directed away from the axis of the bed; a second stage configured to the traversed with a radial inward flow directed toward said axis. The flow through any of said first stage(s) and/or said second stage(s) may be purely radial or axial-radial.

An apparatus according to a preferred embodiment of the invention may comprise a suitable set of perforated walls, preferably cylindrical walls, arranged coaxially one around the other at different radial positions in order to accommodate the stages of the packed bed and distribute the input gas and collect the effluent gas. The perforated walls are configured, according to known art, to be permeable to the gas and at the same time to retain the particles of catalyst.

In a preferred embodiment the packed bed includes at least one stage traversed with an inward flow and one stage traversed with an outward flow. The sequence of inward stage(s) and outward stage(s) according to the gas path (from inlet to outlet) may vary.

In a preferred embodiment the packed bed includes two concentric stages, one with inward flow and one with outward flow. In an embodiment, a two-stage apparatus has an outer stage with inward flow and an inner stage with outward flow. In another embodiment, a two-stage apparatus has an outer stage with outward flow and an inner stage with inward flow.

A particularly preferred embodiment of ta two-stage apparatus includes a set of perforated walls including:
a first wall located at a first radial position (*r₁*),
a second wall located at a second radial position (*r₂*),
a third wall located at a third radial position (*r₃*) and
a fourth wall located at a fourth radial position (*r₄*).

The radial position *rᵢ* denotes the distance of the wall Wi from the axis of the packed bed. Said walls (first to fourth wall) may be arranged coaxially one around the other at different radial positions so that, in a radial direction, the first to fourth wall are arranged sequentially from the first wall which is the innermost wall (*r₁*) close to said axis to the fourth wall which is the outermost wall *(r₄)* away from the axis (i.e. *r₄> r₃> r₂> r₁).*

The packed bed may comprise a first stage between the first perforated wall and the second perforated wall and a second stage between the third perforated wall and the fourth perforated wall, so that the second stage extends coaxially around the first stage.

The apparatus may be arranged to distribute an input gas to the first wall and to the fourth wall, which means the input gas enters a first stage through said first wall and fourth wall. In another embodiment the apparatus is arranged to distribute the input gas to the second wall and to the third wall so that the input gas enters a first stage through said second wall and third wall.

In the above mentioned two options, the apparatus is also arranged to collect the processed gas from the remaining two walls of the set, so that during operation one of said first stage and second stage of the packed bed is traversed by an outward radial flow and the other stage is traversed by a radial inward flow.

More particularly, in a first embodiment of the above described two-stage apparatus the first perforated wall and the fourth perforated wall are configured as inlet collectors; the second perforated wall and third perforated wall are configured as outlet collectors, the first stage is traversed with outward flow and the second stage is traversed with inward flow.

In a second embodiment, the second perforated wall and the third perforated wall are configured as inlet collectors; the first perforated wall and fourth perforated wall are configured as outlet collectors, the first stage is traversed with inward flow and the second stage is traversed with outward flow.

An apparatus according to other embodiments may include two or more concentric stages of the packed bed which are adjacent to each other and traversed sequentially with the same direction of the radial flow, namely inward flow or outward flow.

In an embodiment, all the concentric stages of the packed bed may be traversed with the same direction of the radial flow, i.e. all stages have an inward radial flow or all stages have an outward radial flow.

The packed bed may have the shape of an annulus. A heat exchanger may be fitted in the central part of the annulus and arranged to transfer heat or remove heat to/from the processed gas withdrawn from the packed bed.

In some embodiments the packed bed is a reactive catalytic bed and the processing of the input gas involves a chemical reaction catalysed by the packed bed.

Examples of applications with a reactive bed include: a converter for removing nitric oxides (NOx) and/or nitrous oxide (N₂O) from a flue gas or a tail gas; a reactor for synthesis of ammonia or for synthesis of methanol (MeOH); a steam reformer reactor; a water-gas shift converter, a methanator. These examples are not limiting.

In all cases the invention provides a significant advantage. For example a highly preferred application is a deNOx converter to remove NOx from the tail gas withdrawn from the absorber of a nitric acid plant. The tail gas after removal of NOx is normally expanded to recover energy; the reduced pressure drop of the invention means that more energy can be recovered from expansion. In applications to MeOH converters or NH₃ converters, as the conversion is carried out at high pressure and the input gas needs be compressed, the smaller gas pressure drop across the converter results in a saving of compression energy.

Another interesting application of the invention concerns non-reactive systems like for example an adsorbent bed, a molecular sieve or other applications involving packed beds.

An apparatus according to the invention may include a combination of one or more packed bed divided into concentric stages and conventional packed beds.

The input gas directed to the packed bed may be the full amount of a fresh gas admitted in the apparatus, or the full amount of a gas previously processed in the apparatus. For example the input gas directed to the packed bed may be a partially reacted gas effluent from a catalytic bed installed in the same apparatus, upstream the packed bed herein considered.

The invention therefore can be used in combination with other existing configuration of a solid particle bed, in particular in a multi bed equipment.

An apparatus according to an embodiment may comprise a plurality of packed beds, wherein said packed beds include concentric stages in parallel, and the packed beds are arranged in series so that the second and any subsequent packed bed of the series receives the gas effluent from a previous packed bed. In a typical embodiment the packed beds are arranged one above the other and each packed bed has different concentric stages in parallel at the same elevation.

A particularly preferred application concerns a multi-bed ammonia converter including a series of three beds where a first bed receives the fresh charge of reactants and the effluent is further converted in a second bed and then in a third bed, possibly with inter-bed heat exchange or quench. The design of the first bed is the most challenging because it must process the highly reactive fresh charge. In a preferred application of the invention the first bed may implement the configuration of the present invention with concentric stages in parallel while the second bed and the third bed can maintain a conventional axial radial configuration.

The invention may also be applied in the revamping of existing equipment. An apparatus including one or more catalytic bed may be modernized by replacing an existing catalytic bed with a multi-stage bed having parallel concentric stages according to the present invention.

### Description of figures

Fig. 1 is a scheme of a first embodiment of the invention featuring a packed bed with two stages.
Fig. 2 is a scheme of another embodiment with two stages.
Fig. 3 is a scheme of an embodiment with three stages traversed with an inward flow.

### Description of preferred embodiments

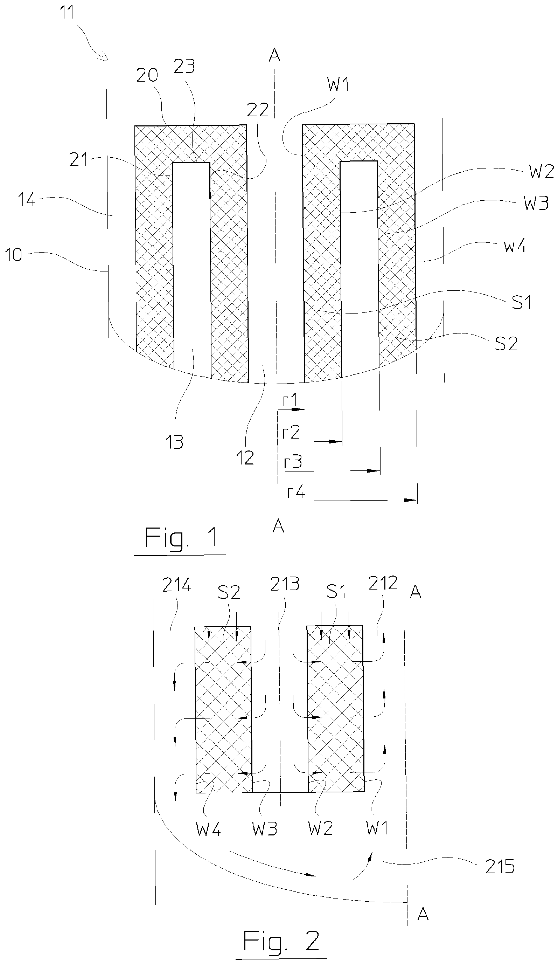

Fig. 1 illustrates a pressure vessel or a cartridge 10 which contains a packed bed (e.g. a catalytic bed) 11. The packed bed 11 has essentially an annular shape with a central annulus 12. The packed bed has a main axis A-A and has substantially a radial symmetry around said axis A-A. For example said axis A-A is a vertical axis.

The packed bed 11 includes perforated walls W1, W2, W3 and W4 coaxial one to another and disposed at a respective radial distance *r₁* to r*₄* relative to the axis A-A as shown. The wall W1 at distance *r₁* from the axis A-A is the innermost wall and the wall W4 is the outermost.

The walls W1 to W4 delimit a first stage S1 of the packed bed which is between the first perforated wall W1 and the second perforated wall W2, and a second stage S2 of packed bed between the third perforated wall W3 and the fourth perforated wall W4. Then the second stage S2 extends coaxially around the first stage S1. It can be seen that the stages S1 and S2 are at the same elevation.

An input gas to be passed through the packed bed 11 is conveyed in part to the first wall W1 and in part to the fourth wall W4. As a consequence the first stage S1 is traversed with an outward flow directed away from the axis A-A. The second stage S2 on the other hand is traversed with an inward flow pointing toward the axis A-A. The effluent gas is collected at the perforated walls W2 and W3 and leaves the packed bed 11 via the annulus 13. In this example the walls W1 and W4 act as gas distributors and the walls W2, W3 as gas collectors.

The gas effluent from the bed 11 may be fed to an exchanger, another process stage, or another packed bed contained in the vessel 10, e.g. below the packed bed 11, if provided.

More in detail the input gas of the packed bed 11 is admitted into the central region 12 and the annular region 14 between the packed bed 11 and the vessel 10. From said regions 12 and 14, the gas flows to the collection region 13 partly via the stage S1 (outward stage) and partly via the stage S2 (inward stage). The concentric stages S1, S2 operates in parallel.

Particularly preferably, the input gas is admitted from above and the cover 20 is also gas-permeable. The walls W2 and W3 preferably have upper portions 21, 22 which are not permeable to gas. The upper surface 23 of the region 13 is also preferably not permeable to gas. As a result of this arrangement, an axial-radial flow can be created in the packed bed stages S1 and S2 due to some input gas passing through the permeable cover 20.

Fig. 2 illustrates a two-stage embodiment similar to Fig. 1 wherein the input gas is conveyed to the walls W2 and W3 and collected at walls W1 and W4, so that the outer stage S2 is traversed outward and the inner stage S1 is traversed inward.

Particularly the input gas is admitted from top in the annular channel 213, which is closed at its bottom. From the channel 213, the input gas flows partly into the central annulus 212 passing through the packed bed stage S1 and partly into the outer annulus 214 passing through the packed bed stage S2. The input gas is partitioned between the parallel stages S1, S2.

The outer annulus 214 is closed at the top, so that the gas collected in the outer annulus 214 is then directed to the central annulus 212 via the passage 215. Said passage 215 puts the outer annulus 214 in communication with the central annulus 212. All the gas passed through the packed bed is finally collected in the central annulus 212.

The embodiments of Fig. 1 and Fig. 2 may accommodate a heat exchanger fitted in the central annulus 12 of Fig. 1 or in the central annulus 212 of Fig. 2.

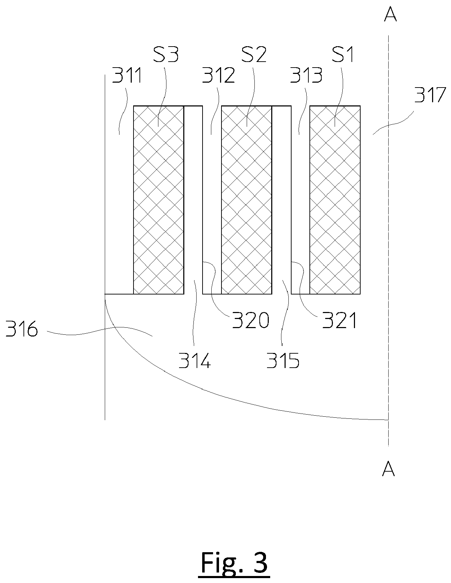

Fig. 3 illustrates an example of a multi-split embodiment where a packed bed includes three concentric stages S1, S2 and S3. Each stage is delimited by two concentric cylindrical perforated walls.

The input gas is admitted from top into the annular channels 311, 312, 313. The input gas is partitioned between said channels 311, 312 and 313.

Each of the annular channels 311, 312 and 313 is closed at the bottom, so that the gas in the channels is forced to pass through the corresponding packed bed stage S1, S2 or S3. Accordingly all stages S1, S2 and S3 are traversed with an inward flow pointing to the axis A-A. The effluent streams from the outer stages S3 and S2 are collected in the annular channels 314, 315 which are in communication with a bottom passage 316. Said bottom passage 316 is in communication with the central region 317. The effluent of the inner stage S1 is collected in the central region 317. It can be noted that suitable walls 320, 321 isolate the collector regions 314 and 315 from the inlet regions 312, 313. Also, all effluents finally reach the region 317 via the passage 316.

Fig. 3 provides an example of a multi-stage embodiment where all stages are traversed with the same direction. Particularly in the example of Fig. 3 all stages have an inward flow.

## Claims

1. An apparatus comprising a packed bed (11) with a radial symmetry around an axis (A-A), wherein the packed bed is composed of a granular solid particles and the apparatus is configured for processing an input gas directed to the packed bed by passing the gas through the packed bed and collecting a processed gas from the packed bed, wherein:
the packed bed comprises a plurality of concentric stages (S1, S2) arranged at the same elevation but at different radial positions in the apparatus;
the packed bed comprises separate gas inlets and separate gas outlets for each of said stages, and the apparatus is arranged to feed the input gas directed to the packed bed in parallel to said concentric stages.

2. An apparatus according to claim 1, wherein the concentric stages of the packed bed comprise at least a first stage configured to be traversed with a radial outward flow, directed away from said axis, and a second stage configured to the traversed with a radial inward flow directed toward said axis.

3. An apparatus according to claim 2, comprising gas feeding means arranged to feed the input gas at an intermediate radial location in the packed bed, from which a first part of the gas enters an inward-flow stage of the packed bed, and a second part of the gas enters an outward-flow stage of the packed bed.

4. An apparatus according to claim 2 or 3, comprising at least:
a set of perforated walls, preferably cylindrical, including a first wall (W1) located at a first radial distance (*r₁*) from said axis (A-A), a second wall (W2) located at a second radial distance (*r₂*) from the axis, a third wall (W3) located at a third radial distance (*r₃*) from the axis and a fourth wall (W4) located at a fourth radial distance (*r₄*) from the axis,
said walls being arranged coaxially one around the other at different radial positions so that, in a radial direction, the first to fourth wall are arranged sequentially from the first wall (W1) which is the innermost wall close to said axis (A-A) to the fourth wall (W4) which is the outermost wall away from the axis;
the packed bed comprises a first stage (S1) between the first perforated wall and the second perforated wall and a second stage (S2) between the third perforated wall and the fourth perforated wall, so that the second stage extends coaxially around the first stage;
the apparatus being arranged to distribute an input gas either to the first and fourth wall or to the second and third wall, and to collect the processed gas from the remaining two walls of said set, so that during operation one of said first stage and second stage of the packed bed is traversed by an outward radial flow and the other stage is traversed by a radial inward flow.

5. An apparatus according to claim 4 wherein: the first perforated wall and the fourth perforated wall are configured as inlet collectors; the second perforated wall and third perforated wall are configured as outlet collectors, the first stage being traversed by the gas with outward flow and the second stage being traversed with inward flow.

6. An apparatus according to claim 4 wherein: the second perforated wall and the third perforated wall are configured as inlet collectors; the first perforated wall and fourth perforated wall are configured as outlet collectors, the first stage being traversed by the gas with inward flow and the second stage being traversed with outward flow.

7. An apparatus according to claim 1 wherein two or more concentric stages of the packed bed, adjacent to each other, are all traversed by an inward radial flow or by an outward radial flow.

8. An apparatus according to claim 7 wherein all the concentric stages of the packed bed are traversed by an inward radial flow or by an outward radial flow.

9. An apparatus according to any of the previous claims, wherein the packed bed has an annular shape with a hollow central region and the apparatus comprises a heat exchanger in the central region of the annulus, said heat exchanger being arranged to transfer heat or remove heat to/from the processed gas withdrawn from the packed bed.

10. An apparatus according to any of the previous claims, wherein the packed bed is a reactive catalytic bed including at least one catalyst and the processing of the input gas passing through the packed bed involves a chemical reaction catalysed by the packed bed, or wherein the packed bed is non-reactive, for example an adsorbent bed or a molecular sieve.

11. An apparatus according to claim 10, wherein the apparatus is one of the following: a converter to remove a contaminant, such as NOx and/or N₂O from the input gas; a reactor for the conversion of the input gas into a target product, such as ammonia or methanol; a steam reformer; a water-gas shift converter.

12. An apparatus according to any of the previous claims wherein the input gas directed to the packed bed is: the full amount of a fresh gas admitted in the apparatus, or the full amount of a gas previously processed in the apparatus.

13. An apparatus according to any of the previous claims, comprising a plurality of packed beds, wherein said packed beds include concentric stages in parallel, and the packed beds are arranged in series so that the second and any subsequent packed bed of the series receives the gas effluent from a previous packed bed.

14. A process comprising feeding an input gas to an apparatus for processing the input gas, passing the input gas through a packed bed contained in the apparatus, optionally after one or more other process steps performed in the apparatus, wherein the packed bed is composed of a granular solid and has a radial symmetry around an axis, wherein the packed bed comprises a plurality of concentric stages at the same elevation, and the process includes splitting the gas directed to the packed bed into separate gas streams and processing each gas stream individually in a respective stage of said packed bed, so that the gas is processed in parallel in the concentric stages of the packed bed.

15. A process according to claim 14, wherein at least a first portion of the gas directed to the packed bed is passed through a first stage of packed bed with a radial outward flow and a second portion of said gas is passed through a second stage of the packed bed with an inward flow.

16. A process according to claim 14 or 15 wherein: processing the gas includes a chemical reaction or wherein processing the gas is non-reactive.
